# EUROPEAN PATENT APPLICATION

(11) **EP 4 804 536 A1**
(43) Date of publication of application: **09.09.2026**
(21) Application number: 24885707.0
(22) Date of filing: 29.10.2024
(51) Int. Cl.: H04N 21/266, G06Q 30/0241

(54) **INFORMATION PROCESSING SYSTEM, INFORMATION PROCESSING METHOD, AND INFORMATION PROCESSING DEVICE**

(30) Priority: 31.10.2023 JP 2023186431
(71) Applicant: Nippon Television Network Corporation, Minato-ku, Tokyo 105-7444 (JP)
(72) Inventor: MATSUMOTO Gaku, Tokyo 105-7444 (JP); TAKEI Hiroaki, Tokyo 105-7444 (JP); SUZUKI Keiichi, Tokyo 105-7444 (JP); YAMAURA Yoji, Tokyo 105-7444 (JP)
(74) Representative: Marks & Clerk LLP
(86) International application number: PCT/JP2024/038519
(87) International publication number: WO 2025/094939

(57) **Abstract**

A novel advertising service can be provided, which is capable of flexibly responding to the expectations and needs of advertisers and advertising companies. An information processing system includes: a setting unit that sets, for a first advertisement that allows terrestrial broadcasting and web distribution, a ratio of the number of times of display in the terrestrial broadcasting to the number of times of display in the web distribution; a determination unit that determines, for terrestrial broadcasting, advertisement materials to be allocated to a predetermined advertisement slot by inputting into a mathematical model, in which an objective function is set, an inventory variable, a guarantee variable, and a constraint condition; a bid management unit that acquires, in a case where there is a vacant position in the predetermined advertisement slot, advertisement materials that have won the bid for the vacant position; a generation unit that generates an advertisement playlist for the predetermined advertisement slot on the basis of the advertisement materials; and an output unit that outputs the advertisement playlist to an advertisement management apparatus that manages a plurality of advertisement materials, and outputs, to a distribution management apparatus, an advertisement material of the first advertisement and the number of times of display of the web distribution set by the setting unit.

## Description

### Technical Field

The technique of the present disclosure relates to an information processing system, an information processing method, and an information processing apparatus.

### Background Art

Conventionally, among a plurality of advertising media, a technique for fusing advertisements across broadcasting and networks, particularly a technique for automatically synchronizing the timing of advertisements while optimizing display modes thereof, to achieve high advertising effectiveness, has been known (see, for example, Patent Literature 1).

### Citation List

### Patent Literature

Patent Literature 1: Japanese Patent No. 5121729

### Summary of Invention

### Technical Problem

However, while the conventional art is a technique for automatically synchronizing the timing of advertisements and fusing advertisements across broadcasting and networks, it does not necessarily mean that said technique is capable of flexibly responding to the expectations and needs of advertisers and advertising companies.

Therefore, an object of the technique of the present disclosure is to provide a novel advertising service that is capable of flexibly responding to the expectations and needs of advertisers and advertising companies.

### Solution to Problem

An information processing system according to one aspect of the present disclosure includes: a setting unit that sets, for a first advertisement that allows terrestrial broadcasting and web distribution, a ratio of the number of times of display in terrestrial broadcasting to the number of times of display in web distribution; a determination unit that determines, for terrestrial broadcasting, one or a plurality of advertisement materials to be allocated to a predetermined advertisement slot by inputting into a mathematical model, in which an objective function satisfying predetermined conditions regarding display inventory of advertisements is set, an inventory variable regarding display inventory of a plurality of advertisements including the first advertisement, a guarantee variable regarding a display guarantee for each of the plurality of advertisements including the first advertisement, and a constraint condition regarding advertisement display; a bid management unit that acquires, after the determination made by the determination unit, in a case where there is a vacant position in the predetermined advertisement slot, one or a plurality of advertisement materials that have won the bid for the vacant position; a generation unit that generates an advertisement playlist for the predetermined advertisement slot on the basis of the advertisement materials determined by the determination unit and/or the advertisement materials acquired by the bid management unit; and an output unit that outputs the advertisement playlist to an advertisement management apparatus that manages a plurality of advertisement materials, and outputs, to a distribution management apparatus that manages web distribution of advertisements, an advertisement material of the first advertisement and the number of times of display of the web distribution set by the setting unit.

### Advantageous Effects of Invention

According to the technique of the present disclosure, it is possible to provide a novel advertising service capable of flexibly responding to the expectations and needs of advertisers and advertising companies.

### Brief Description of Drawings

[Figure 1] Figure 1 is a diagram illustrating an example of an overview of a platform according to the technique of the present disclosure.
[Figure 2] Figure 2 is a diagram illustrating an example of operation in a platform according to the technique of the present disclosure.
[Figure 3] Figure 3 is a diagram illustrating an example of a configuration of an information processing system according to an embodiment.
[Figure 4] Figure 4 is a block diagram illustrating an example of a first server according to an embodiment.
[Figure 5] Figure 5 is a diagram illustrating an example of a third server according to an embodiment.
[Figure 6] Figure 6 is a diagram for explaining an advertisement slot and an advertisement playlist according to an embodiment.
[Figure 7] Figure 7 is a diagram illustrating an example of attribute information of an advertisement slot according to an embodiment.
[Figure 8] Figure 8 is a diagram illustrating an example of attribute information of an advertisement material according to an embodiment.
[Figure 9] Figure 9 is a diagram illustrating an example of data of an advertisement slot and data in which respective advertisement materials are grouped according to an embodiment.
[Figure 10] Figure 10 is a diagram illustrating an example of an allocation pattern to an advertisement slot according to an embodiment.
[Figure 11] Figure 11 is a diagram illustrating an example of initial display ratios of broadcasting and web distribution in an embodiment.
[Figure 12] Figure 12 is a flowchart illustrating an example of allocation processing for an advertisement slot according to an embodiment.
[Figure 13] Figure 13 is a flowchart illustrating an example of display ratio setting processing for an integrated advertisement according to an embodiment.
[Figure 14] Figure 14 is a flowchart illustrating an example of advertisement material allocation processing using a mathematical model according to an embodiment.

### Description of Embodiments

Preferred embodiments of the present disclosure will be described with reference to the accompanying drawings. It should be noted that in the figures, identical reference numerals denote identical or similar configurations.

### [Embodiments]

Hereinafter, an information processing system according to the technique of the present disclosure will be described. In the technique of the present disclosure, the term "broadcasting" refers to a concept that includes television broadcasting and radio broadcasting. In addition, the term "program" includes programs of television broadcasting and radio broadcasting that are broadcast during predetermined broadcast time slots. Advertising refers to the act of widely informing the general public, including advertisements that are broadcast via terrestrial waves and the like, and advertisements web-distributed on the web via the Internet, and the like. A generic term for television commercials and radio commercials is denoted as "commercial", and a commercial is a form of advertising.

### <Overview of platform>

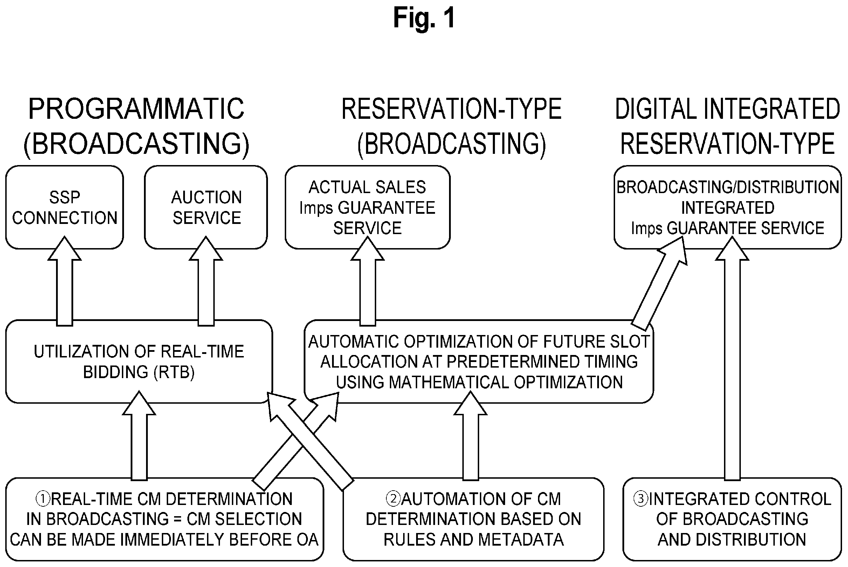

Figure 1 is a diagram illustrating an example of an overview of a platform according to the technique of the present disclosure. The platform illustrated in Figure 1 mainly has the following three functions.
(1) Determine the number of times of display a real-time commercial (CM) in broadcasting. It is possible to select a CM up to a predetermined time before on-air (OA).
(2) Automation of CM determination based on broadcasting or distribution rules and metadata
(3) Integrated control of broadcasting and distribution

Each function will be described below.

### (1) Real-time CM selection

For example, in the technique of the present disclosure, if there is a CM slot that can be selected immediately before OA, real-time bidding (RTB) is utilized, and a winning advertisement material is allocated to an advertisement slot. For example, the platform connects to an SSP (Supply Side Platform), and the SSP realizes RTB transactions with a DSP (Demand Side Platform). In addition, the platform may use another auction service. This service is performed, for example, for programmatic advertisements in broadcasting.

### (2) Automation of CM determination

The platform formulates constraints on advertisement broadcasting, allocation methods for advertisement slots, and the like into rules, assigns attribute information of advertisement materials and advertisement slots to the advertisement materials and the advertisement slots as metadata, and appropriately performs selection of an advertisement material using same. For example, the platform uses a mathematical model (e.g., a mathematical optimization model) to allocate, with respect to future slot reservation, a predetermined advertisement material to a predetermined advertisement slot at a predetermined timing (e.g., at a predetermined time every day). Advertisements allocated using this mathematical optimization model are advertisements such as those for broadcasting, and include reservation-type advertisements.

### (3) Integrated control of broadcasting and distribution

The platform includes a digital integrated service that integrates advertisement distribution via the Internet and advertisement broadcasting via broadcasting, fuses broadcasting and distribution, and guarantees impressions (Imp) of the advertisements. This service is performed, for example, for reservation-type advertisements. The number of impressions can be replaced by the number of times of display. Such integrated type of advertisements are also referred to as "integrated advertisements."

Here, the aforementioned programmatic advertisements and guaranteed-type advertisements will be described. Guaranteed-type advertisements, also referred to as reservation-type advertisements, are a type of advertisement for which an advertisement period and the number of advertisements are guaranteed. Guaranteed-type advertisements include a position-specified type and an impression-guaranteed type. The position-specified type is a form in which an advertisement slot to be broadcast and a position of the advertisement slot are specified. The impression-guaranteed type is a form in which the number of times of display (the number of impressions) of an advertisement within a predetermined period is guaranteed without specifying an advertisement slot or a position. On the other hand, programmatic advertisements are a form of advertisement in which an advertisement slot is determined through bidding according to a budget and desired conditions of an advertiser, without specifying an advertisement slot or a position.

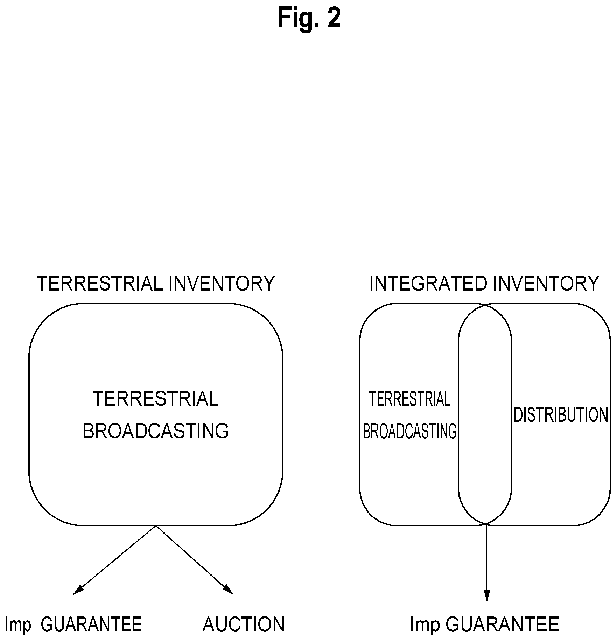

Figure 2 is a diagram illustrating an example of operation in a platform according to the technique of the present disclosure. The example illustrated in Figure 2 presents two operation examples. Inventory indicates the number of impressions (the number of times of display) of an advertisement estimated within a fixed future period, and, in the case where there is a number of impressions guaranteed within a predetermined period under a contract or the like, indicates the remaining number of impressions required by the deadline. For terrestrial inventory, products are offered in which, utilizing terrestrial broadcasting, the number of impressions is guaranteed, a slot is specified, or an auction is performed. In addition, for integrated inventory of broadcasting and digital, products that guarantee the number of impressions are offered utilizing both terrestrial broadcasting and web distribution. It should be noted that although not illustrated in Figure 2, for digital inventory, products that guarantee impressions for Internet advertisements may be offered.

As described above, the platform of the present disclosure is capable of supporting both programmatic advertisements and guaranteed-type advertisements, and is also capable of supporting advertisements via broadcasting and digital advertisements via web distribution, and thus can provide a novel advertising service capable of flexibly responding to the expectations and needs of advertisers and advertising companies. Next, an information processing system that implements the aforementioned platform will be described.

### <System configuration>

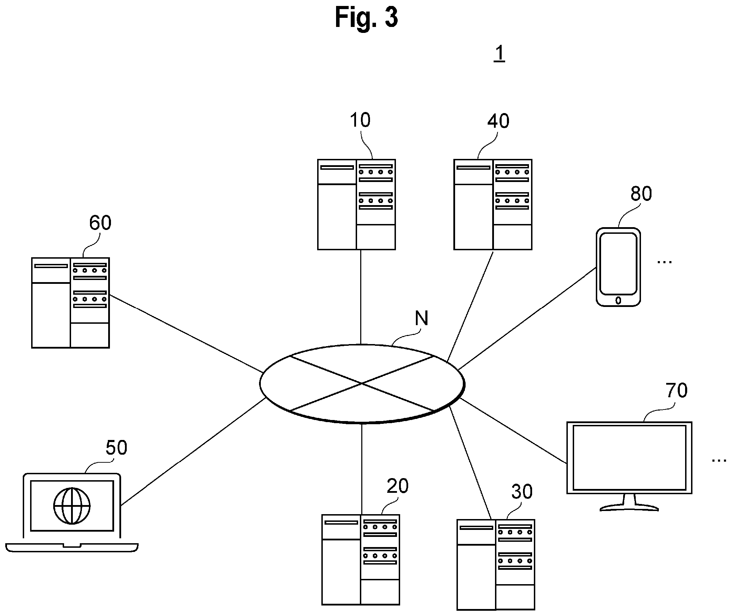

Figure 3 is a diagram illustrating an example of a configuration of an information processing system 1 according to an embodiment of the present disclosure. In the example illustrated in Figure 3, the information processing system 1 that implements the aforementioned platform includes a first information processing apparatus (first server) 10, a second information processing apparatus (second server) 20, a third information processing apparatus (third server) 30, a fourth information processing apparatus (fourth server) 40, a fifth information processing apparatus 50, a sixth information processing apparatus 60, one or a plurality of display devices 70, and one or a plurality of user devices 80.

Each apparatus in the information processing system 1 transmits and receives data to and from each other via the network N. Each server may be composed of a plurality of processing apparatuses (which may include a database), and the number of display devices 70 and user devices 80 may be arbitrary.

The first server 10 is a core operation coordination server that constitutes the aforementioned platform. For example, the first server 10 integrates inventory of broadcasting and distribution, and appropriately performs inventory management and slot operation. Main functions of the first server 10 include "inventory management", "advertisement management", "slot operation", and the like, but the first server 10 may also perform request transmission to an SSP and API (Application Programming Interface) coordination with external sites. In particular, the "slot operation" function is required to be sophisticated in order to improve sales of a platformer, and also has a function similar to planning for slot reservation and optimization.

The second server 20 is a common material management server that centrally manages all advertisement materials for broadcasting and distribution handled by the aforementioned platform. The second server 20 permits upload of advertisement materials via online advertisement submission, not limited to the sales site provided by the fifth information processing apparatus 50 described later, performs quality check and transcoding of the advertisement materials, and further retains examination statuses and restriction information.

The third server 30 transmits a request to the first server 10 before a predetermined time (for example, 3 seconds) of advertisement delivery, and broadcasts advertisements according to a playlist acquired as a response thereto. For example, the third server 30 enables a programmatic approach in broadcasting by leaving a CM material to be broadcast undetermined until immediately before broadcasting. This makes it possible to improve flexibility in final advertisement delivery, and eliminates the need to determine the playlist until immediately before advertisement delivery.

The fourth server 40 is an advertisement management server that sets a tag or the like for advertisement distribution, and performs advertisement distribution. The fourth server 40 is, for example, GAM (Google Ad Manager), and is also capable of distributing advertisements via a network, or distributing advertisements as a banner or video content. In addition, the fourth server 40 optimizes advertisement distribution for advertisements with impression guarantee so as to reach a promised distribution amount.

The fifth information processing apparatus 50 sells advertisements on the aforementioned platform. In addition, the fifth information processing apparatus 50 is capable of registration, planning, ordering, cancellation, material change, operation, and reporting of advertisement materials for new business flows and new products, and may also perform last-minute changes to existing spot materials.

The sixth information processing apparatus 60 is an apparatus that provides an SSP, and, each time an auction occurs, automatically selects an advertisement with high profitability from within a DSP, and distributes same. For example, when the first server 10 sets ordering conditions such as an advertisement slot, a price, and a desired industry for placement in the SSP, the sixth information processing apparatus 60, in coordination with the DSP, automatically selects a highly profitable advertisement and delivers the selected advertisement to the first server 10.

The display device 70 is a device that receives and displays terrestrial broadcasting. The display device 70 is, for example, a television, which receives terrestrial waves transmitted via the third server 30 and displays television programs, advertisements, and the like.

The user device 80 is, for example, an information processing apparatus having a communication function, such as a portable terminal like a smartphone owned by each user, a personal computer, a tablet terminal. The user device 80 displays an advertisement distributed from the fourth server 40, or a program or the like broadcast via the Internet.

### <Configuration>

Hereinafter, among the apparatuses of the information processing system 1, respective configurations of the first server 10 and the third server 30, which have main functions for realizing the aforementioned platform, will be described. Hardware configurations of the other apparatuses are the same as those of the first server 10 and third server 30.

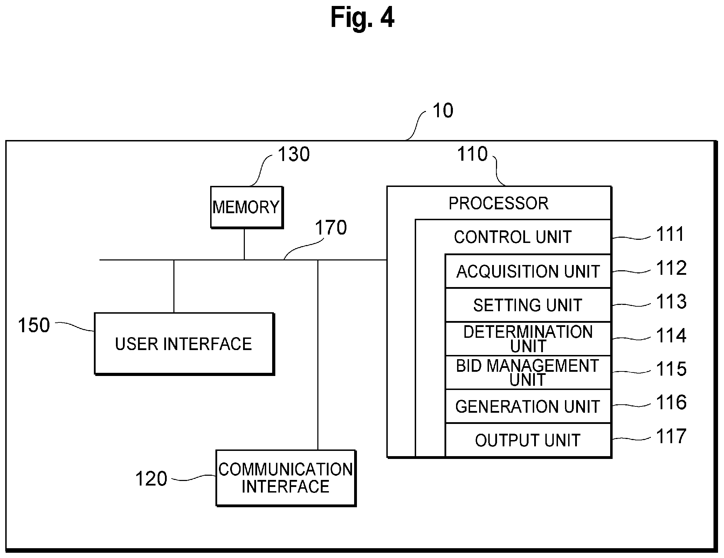

Figure 4 is a block diagram illustrating an example of the first server 10 according to an embodiment of the present disclosure. The first server 10 includes one or a plurality of processors (CPUs) 110, one or a plurality of communication interfaces 120, a memory 130, a user interface 150, and one or a plurality of communication buses 170 for interconnecting these components.

The user interface 150 is connected to a display and an input device (such as a keyboard and/or a mouse, or some other pointing device) and has a display function and an input function.

The memory 130 is, for example, a high-speed random access memory such as a DRAM, an SRAM, or other random access solid-state storage devices, and may also be a nonvolatile memory such as one or a plurality of magnetic disk storage devices, optical disk storage devices, flash memory devices, or other nonvolatile solid-state storage devices, and may be a non-transitory recording medium.

The memory 130 stores data used by the information processing system 1. For example, the memory 130 stores advertisement inventory information, information regarding advertisement materials, information regarding advertisement slots, and the like.

In addition, as another example of the memory 130, one or a plurality of storage devices remotely located from the processor 110 may be used. In an embodiment, the memory 130 stores programs, modules, and data structures executed by the processor 110, or a subset thereof.

The processor 110 executes an application program stored in the memory 130, thereby implementing a control unit 111, and the control unit 111 includes an acquisition unit 112, a setting unit 113, a determination unit 114, a bid management unit 115, a generation unit 116, and an output unit 117.

The control unit 111 controls respective processing of the disclosed inventory management, advertisement group management, and operation of advertisement slots. For example, the control unit 111 sets an advertisement material in an advertisement slot at a predetermined timing, sets an advertisement material through RTB in a vacant advertisement slot, and achieves a guaranteed number of impressions for an impression-guaranteed advertisement using broadcasting, distribution, or the like. In addition, the control unit 111 includes the acquisition unit 112, the setting unit 113, the determination unit 114, the bid management unit 115, the generation unit 116, and the output unit 117 for executing the aforementioned processing.

The acquisition unit 112 acquires information necessary for advertisement broadcasting and distribution. The acquisition unit 112 acquires, from the memory 130 or an external device, for example, the guaranteed number of impressions (guaranteed Imp count) set for an advertisement, the advertisement inventory (remaining Imp count), variables input into a mathematical model for setting guaranteed-type advertisements to predetermined advertisement slots, and the like. The variables input into the mathematical model include, for example, an inventory variable regarding display inventory of each advertisement, a guarantee variable regarding a display guarantee for an advertisement, and a variable relating to a constraint condition regarding advertisement display, and the like.

The setting unit 113 sets, for a first advertisement that allows terrestrial broadcasting and web distribution, a ratio (display ratio) of the number of times of display in terrestrial broadcasting to the number of times of display in web distribution. For example, the setting unit 113 sets, for a first integrated advertisement (integrated advertisement) that may be delivered via either terrestrial broadcasting or digital web distribution, a display ratio of terrestrial broadcasting to web distribution. For example, if an advertiser desires that the advertisement be displayed more in terrestrial broadcasting, the ratio may be set to 8 (terrestrial broadcasting) : 2 (web distribution); if the advertiser desires that the advertisement be displayed in terrestrial broadcasting and web distribution to a similar extent, the ratio may be set to 5 (terrestrial broadcasting) : 5 (web distribution); and if the advertiser desires that the advertisement be displayed preferentially in one of them (for example, terrestrial broadcasting), the ratio may be set to 10 (terrestrial broadcasting) : 0 (web distribution).

The determination unit 114 determines, for terrestrial broadcasting, one or a plurality of advertisement materials to be allocated to a predetermined advertisement slot by inputting into a mathematical model in which an objective function satisfying predetermined conditions regarding display inventory of advertisements is set, an inventory variable regarding display inventory of a plurality of advertisements including the first advertisement, a guarantee variable regarding display guarantees for a plurality of advertisements including the first advertisement, and a constraint condition regarding advertisement display.

For example, the determination unit 114 inputs the following variables, performs a search for advertisement materials using a mathematical optimization algorithm (mathematical model) such that the objective based on the objective function is achieved while satisfying the constraint conditions, and determines one or a plurality of advertisement materials to be allocated to a predetermined advertisement slot.
- Objective function: Achievement of guaranteed impressions, and maximization of remaining inventory (remaining Imp count)
- Constraint condition: Satisfy a broadcasting rule specified in advance (e.g., time constraint, exclusion item, or the like)
- Inventory variable: Remaining inventory (remaining Imp count) for each advertisement, and ordering conditions for each campaign (e.g., budget, target, area, or the like).
- Guarantee variable: Guaranteed Imp count (guaranteed Imp count for each target if a target is set)

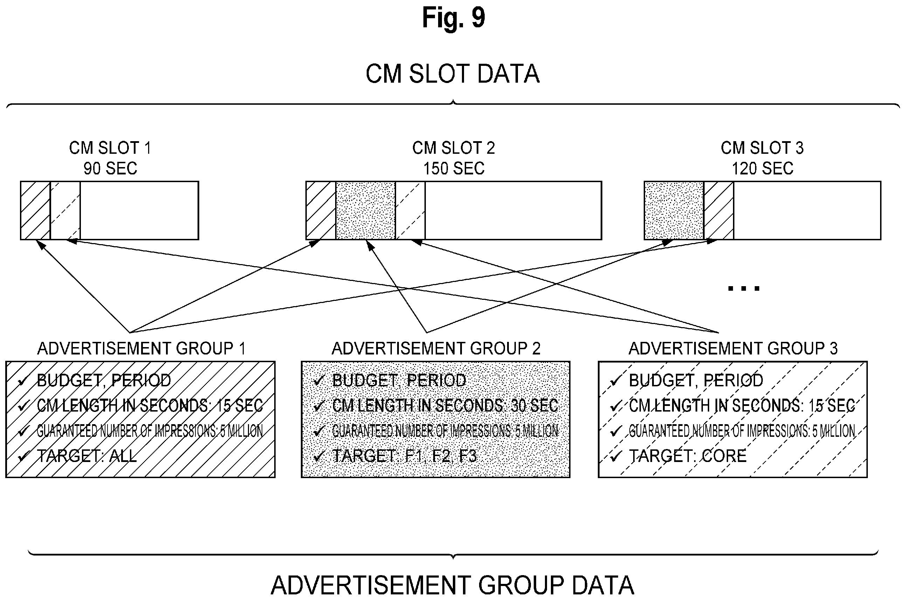

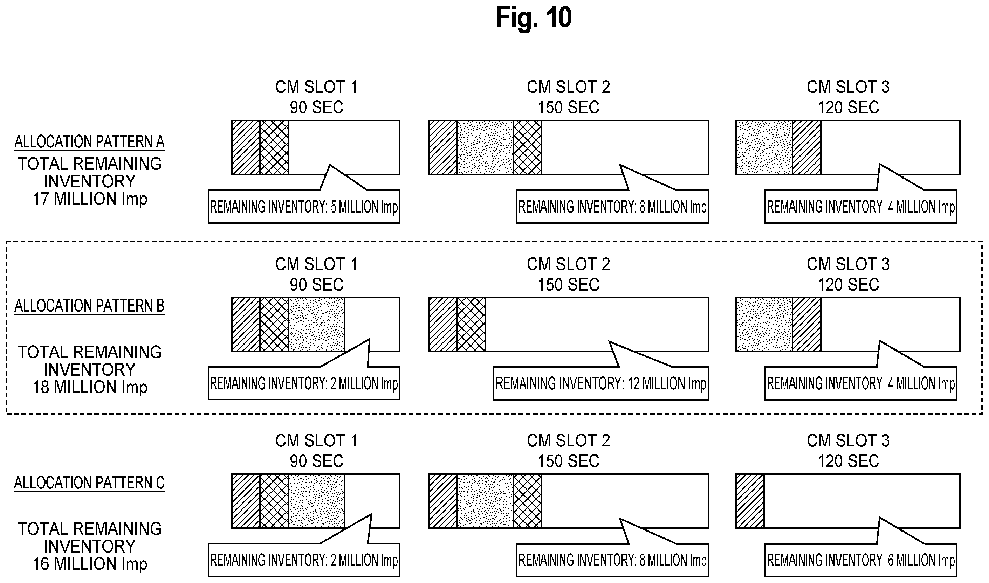

A specific example of advertisement material allocation will be described later with reference to figure 9 and figure 10.

The bid management unit 115 acquires, after the determination of advertisement materials made by the determination unit 114, in the case where there is a vacant position in the predetermined advertisement slot, one or a plurality of advertisement materials that have won the bid for the vacant position. For example, the bid management unit 115 causes the SSP provided by the sixth information processing apparatus 60 to perform an auction by setting an advertisement slot, a price, a desired industry for placement, and the like, and acquires one or a plurality of winning advertisement materials. It should be noted that the bid management unit 115 is not necessarily an essential component, as long as a predetermined advertisement material can be allocated to the vacant position.

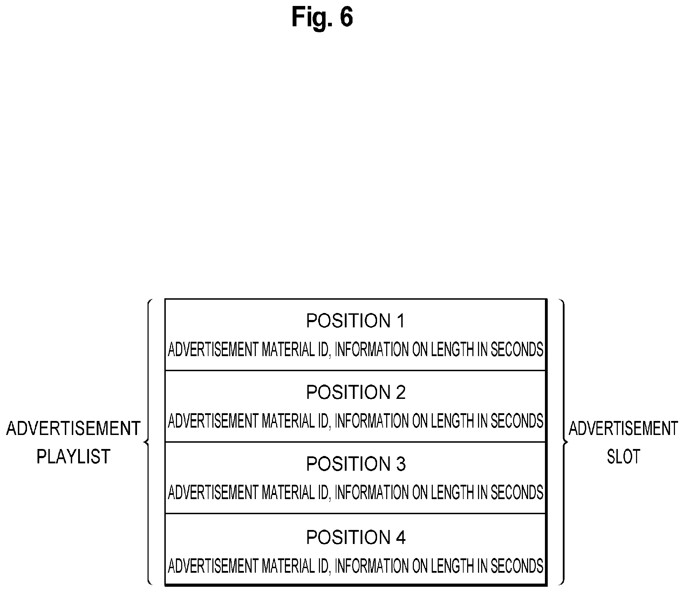

The generation unit 116 generates an advertisement playlist for the predetermined advertisement slot on the basis of the advertisement materials determined by the determination unit 114 and/or the advertisement materials acquired by the bid management unit 115. The predetermined advertisement slot and the advertisement playlist will be described later with reference to figure 6. For example, for a predetermined advertisement slot including a plurality of positions, an advertisement material is allocated to at least one position using the mathematical model, and a winning advertisement material is allocated to a position not allocated using the mathematical model or to a position that has become vacant due to a predetermined reason after once being allocated. The generation unit 116 generates an advertisement playlist including identification information (ID) of the advertisement materials allocated to each position. In the case where there remains a vacant position in the advertisement slot even after the completion of the bidding processing, the generation unit 116 may be set in advance to allocate a predetermined advertisement material to such a vacant position.

The output unit 117 outputs the advertisement playlist to an advertisement management apparatus (for example, the third server 30) that manages a plurality of advertisement materials, and outputs, to a distribution management apparatus (the fourth information processing apparatus 40) that manages web distribution of advertisements, an advertisement material of the first advertisement and the number of times of display of web distribution set by the setting unit 113.

The output unit 117 outputs the advertisement playlist generated by the generation unit 116 to the third server 30, and the third server 30 identifies an advertisement material from identification information of the advertisement material according to the advertisement playlist, and transmits the identified advertisement material via a transmission management apparatus (not illustrated) over terrestrial waves. The display device 70 that has received the terrestrial waves displays a program, an advertisement, or the like included in the terrestrial waves.

In addition, the output unit 117 outputs the first advertisement and the remaining inventory (remaining Imp count) to the fourth information processing apparatus (GAM) 40 via the Internet. The fourth information processing apparatus 40 distributes the first advertisement at an appropriate time and on an appropriate medium while achieving a guaranteed number of impressions (guaranteed Imp count) of an advertisement material distributed over the Internet.

According to the processing described above, it is possible to support both programmatic advertisements and guaranteed-type advertisements, and it is also possible to support advertisements via broadcasting and digital advertisements via web distribution, and thus it is possible to provide a novel advertising service capable of flexibly responding to the expectations and needs of advertisers and advertising companies. For example, the information processing system 1 has the following three benefits.

### (1) Real-time determination of an advertisement by introduction of the third server 30 using a request-and-response scheme.

When a request for an advertisement material is made from the third server 30 to the first server 10 a predetermined time before the advertisement slot is delivered, the first server 10 automatically selects an appropriate advertisement material for the advertisement slot using RTB and responds in a playlist format. This eliminates the lead time due to a conventional manual workflow.

### (2) Automation of advertisement determination based on constraint rules and metadata such as advertisement material

A mathematical optimization algorithm is created that formulates all conditions necessary for advertisement determination, such as an advertisement contract (e.g., a desire to have 10 million views by the F1 demographic, consumer finance advertisement), an advertisement slot (e.g., an advertisement inserted in a news program, likely to be viewed by 1 million people), and a brand safety constraint (e.g., a consumer finance advertisement must not be aired in an advertisement inserted in a news program), thereby enabling fully mechanical slot reservation determination. Accordingly, once the mathematical optimization algorithm is executed, it becomes possible to automatically determine an appropriate advertisement for a predetermined advertisement slot.

### (3) Integration of broadcasting and distribution

For example, by regarding one view in terrestrial broadcasting and one view in a video distribution service as equivalent, and managing respective advertisement displays by the same first server 10, it becomes possible to integrate and effectively utilize inventory of broadcasting and distribution.

In addition, the setting unit 113 may inquire of the determination unit 114 and the fourth server 40, which serves as a distribution management apparatus, whether the number of times of display based on the ratio (display ratio) of terrestrial broadcasting to web distribution is permissible. For example, when 10 million impressions (number of times of display) are guaranteed under a contract for the first advertisement and the display ratio is set to 5:5, the setting unit 113 inquires of the determination unit 114 whether 5 million impressions can be delivered for the first advertisement. The determination unit 114 determines whether 5 million times of display can be delivered within the contract period on the basis of an advertisement slot, a guaranteed number of impressions for another advertisement, viewing rates, and other factors. The determination unit 114 outputs the determination result to the setting unit 113.

In addition, the setting unit 113 inquires of the fourth server 40 whether 5 million impressions can be delivered or not for the first advertisement. The fourth server 40 determines whether 5 million times of display can be delivered within the contract period on the basis of an advertisement slot, the number of accesses, a guaranteed number of impressions for another advertisement, and other factors. The fourth server 40 outputs the determination result to the setting unit 113. The determination unit 114 determines whether the display ratio is permissible on the basis of the determination results from the determination unit 114 and the fourth server 40.

Through the processing described above, it becomes possible to determine in advance whether the display ratio set for the first advertisement is feasible. As a result, it becomes possible to prevent in advance the setting of a display ratio that is difficult to achieve.

In addition, in the case where an inquiry result from at least one of the determination unit 114 and the fourth server 40 is negative, the setting unit 113 may adjust the display ratio and make an inquiry again to the determination unit 114 and the fourth server 40. For example, if at least one determination result is NG, the setting unit 113 adjusts the display ratio according to a predetermined adjustment method.

In the case where one determination result is NG, the setting unit 113 may reduce the display ratio for the corresponding side by a predetermined ratio. As an example, in the case where the determination result from the fourth server 40 is NG, the setting unit 113 changes the display ratio from 5 (terrestrial broadcasting) : 5 (web distribution) to 6 (terrestrial broadcasting) : 4 (web distribution), and inquires again of the determination unit 114 and the fourth server 40 whether display is permissible with the revised display ratio. In addition, in the case where both determination results are NG, the setting unit 113 may propose to the advertiser or the like that the guaranteed number of impressions be reduced.

Through the processing described above, it is possible to automatically adjust the display ratio, and it becomes possible to reduce a burden on an administrator or the like of the platform.

In addition, the setting unit 113 may set an initial ratio on the basis of a guaranteed number of times of display. For example, the setting unit 113 may set the ratio to 100% web distribution in the case where the guaranteed number of times of display set forth in the contract is less than a first predetermined value; 70% terrestrial broadcasting and 30% web distribution in the case where the guaranteed number of times of display is the first predetermined value or more but less than a second predetermined value; and 90% terrestrial broadcasting and 10% web distribution in the case where the guaranteed number of times of display is a second threshold value or more. It should be noted that the conditions and display ratios described above are merely examples, and other conditions and processing ratios may also be set.

Through the processing described above, once the guaranteed number of impressions for the first advertisement is set, it becomes possible to automatically set an initial ratio.

### (Interrupt processing)

In addition, the determination unit 114 may determine to increase the number of times of display in web distribution in the case where the number of times of display of the first advertisement in terrestrial broadcasting does not satisfy a first fulfillment condition. For example, in the case where the remaining number of impressions (remaining Imp count to be fulfilled) out of the guaranteed Imp count of the integrated advertisement is a first threshold value or less within the contract period of the advertisement (an example of the first fulfillment condition), the determination unit 114 notifies the fourth server 40 of the remaining Imp count to be fulfilled via broadcasting. The fourth server 40 web-distributes, for the advertisement, the remaining Imp count to be fulfilled via broadcasting. It should be noted that the first threshold may be defined for each area and target.

In addition, the determination unit 114 inquires whether the advertisement can be accepted by an advertisement distribution tool for the web distribution within the contract period of the first advertisement. If the advertisement can be accepted by the advertisement distribution tool, the determination unit 114 may increase the guaranteed Imp count via web distribution and decrease the guaranteed Imp count via broadcasting. This makes it possible to flexibly handle the delivery of the advertisement from future slot reservation and the basic playlist.

According to the processing described above, it becomes possible to change the guaranteed Imp count for broadcasting and web distribution on the basis of the remaining Imp count indicating the current Imp count within the contract period. For example, the determination unit 114 may change the display ratio of the initially set guaranteed Imp count. Here, it is difficult to accurately predict the viewing rate for the number of display times via broadcasting. However, in the case of web distribution, since the number of times of display can be accurately grasped from the number of accesses, in the case where the remaining Imp count becomes less than the first threshold value, by utilizing web distribution, it becomes possible to fulfill the guaranteed Imp count without significantly exceeding same.

In addition, the determination unit 114 may determine to increase the number of times of display in terrestrial broadcasting in the case where the number of times of display of the first advertisement in web distribution does not satisfy a second fulfillment condition. For example, in the case where the fulfillment status of the integrated guaranteed Imp count is poor, for example, in the case where the remaining Imp count to be fulfilled does not satisfy being the second threshold value or less (a second fulfillment condition), the determination unit 114 increases the number of times of display via broadcasting rather than via web distribution. Specifically, the determination unit 114 may perform, among the pieces of interrupt processing described later, handling for shortfall.

According to the processing described above, in the case where the fulfillment rate of the number of times of display is poor even when the contract deadline approaches, it becomes possible to aim to fulfill the guaranteed number of impressions by increasing the number of times of display via broadcasting. For example, when expectations cannot be placed on the number of times of display via web distribution (sufficient accesses cannot be counted on), by forcibly increasing the number of times of display via broadcasting, it becomes possible to aim to achieve the guaranteed Imp count.

It should be noted that regarding the aforementioned change of the display ratio, the determination unit 114 may preferably determine whether or not to change the display ratio by acquiring, at a predetermined timing (e.g., periodically), the remaining Imp count to be fulfilled via web distribution from the fourth server 40.

### (Handling for surplus)

In addition, in the case where the number of times of display of a predetermined advertisement satisfies a third fulfillment condition, the determination unit 114 may delete the advertisement material of the predetermined advertisement allocated to another advertisement slot. For example, in the case where the fulfilled Imp count exceeds the guaranteed Imp count by a certain value or more (the third fulfillment condition), and the advertisement is scheduled to be delivered within the current day, the determination unit 114 deletes the relevant advertisement from future slot reservation and from the current day's playlist. It should be noted that the third fulfillment condition may take into account a deviation in the preliminary viewing rate.

The determination unit 114 may allocate another advertisement material to a position vacated due to deletion. For example, the determination unit 114 allocates advertisement materials to vacated positions in the following order:
1. Winning advertisement materials from an auction held by the bid management unit 115
2. Advertisement materials whose remaining Imp count to be fulfilled is a predetermined value or more
3. Advertisement materials such as in-house PR content
   An auction may be conducted for special advertisement materials for which bidding below the floor price is permitted.
4. Public service advertising

Through the processing described above, for an advertisement that has achieved the guaranteed Imp count before the expiration of the contract period, by performing the handling for surplus in the interrupt processing, it becomes possible to delete the corresponding advertisement that is allocated for the future or that has already been allocated, and reallocate the slot to another advertisement. As a result, it becomes possible to aim for overall optimization with respect to the achievement of the guaranteed number of impressions for a plurality of advertisements.

### (Handling for shortfall)

In addition, in the case where the number of times of display of a predetermined advertisement does not satisfy a fourth fulfillment condition, the determination unit 114 may allocate the advertisement material of the predetermined advertisement to another advertisement slot. For example, in the case where it is the final day of the advertisement and the total of the remaining estimated Imp counts is less than the remaining Imp count to be fulfilled (the fourth fulfillment condition), the determination unit 114 allocates the corresponding advertisement to the current day's advertisement playlist by interrupt processing. The estimated Imp count indicates, for example, the total number of impressions estimated on the basis of a predicted viewing rate or a predicted number of accesses. The fourth fulfillment condition may also take into account a deviation in the preliminary viewing rate.

It should be noted that in the case where there is no vacant inventory suitable for allocation, the determination unit 114 identifies an advertisement having a longer remaining term until the expiration of the contract period, deletes the identified advertisement, and allocates the interrupt-target advertisement to the vacated position. For example, vacant inventory suitable for allocation includes inventory within 150% of the required Imp count. The reason for setting the inventory to within 150% is that, due to a deviation between the predicted viewing rate and the actual viewing rate, there are cases where advertisements with inventory within 150% do not exceed the required Imp count.

Through the processing described above, for an advertisement that is unlikely to achieve the guaranteed Imp count immediately before the expiration of the contract period, by performing the handling for shortfall in the interrupt processing, it becomes possible to urgently allocate the interrupt-target advertisement to the current day's advertisement playlist. As a result, it becomes possible to aim for overall optimization with respect to the achievement of the guaranteed number of impressions for a plurality of advertisements.

It should be noted that the processing for handling surplus or shortfall may be performed by the determination unit 114 at the following timings:
- Timing at which an actual delivery volume is generated on the basis of the preliminary viewing rate
- Timing at which an actual delivery volume is updated on the basis of the confirmed viewing rate
- Timing at which, upon receipt of on-air data, the existing playlist cannot be properly carried over and the allocated advertisement is deleted

The preliminary viewing rating, confirmed viewing rate, and the like may be acquired from a research company.

In addition, the determination unit 114 may input, at a predetermined timing, at least the latest inventory variable and the latest guarantee variable into a mathematical model, and may update one or a plurality of advertisement materials to be allocated to a predetermined advertisement slot. For example, the determination unit 114 determines or updates, at a predetermined time every night, one or a plurality of advertisement materials to be allocated to a predetermined advertisement slot for the next day.

Through the processing described above, whereas conventionally, for example, an allocation instruction is issued four days before the advertisement slot is used for broadcasting, with the information processing system 1 of the present disclosure, it becomes possible to flexibly allocate guaranteed-type advertisements to advertisement slots using a mathematical model as late as the previous day, for example.

Furthermore, in the information processing system 1 of the present disclosure, allocation of a programmatic advertisement can be performed several seconds before broadcasting, making it possible to allocate advertisements in real time. Moreover, in the information processing system 1 of the present disclosure, it becomes possible to update the advertisement playlist for broadcasting in consideration of the number of impressions of advertisements via web distribution, and to execute changes to the display ratio, allocation processing immediately before the expiration of the contract period, and the like, in order to achieve the guaranteed number of impressions.

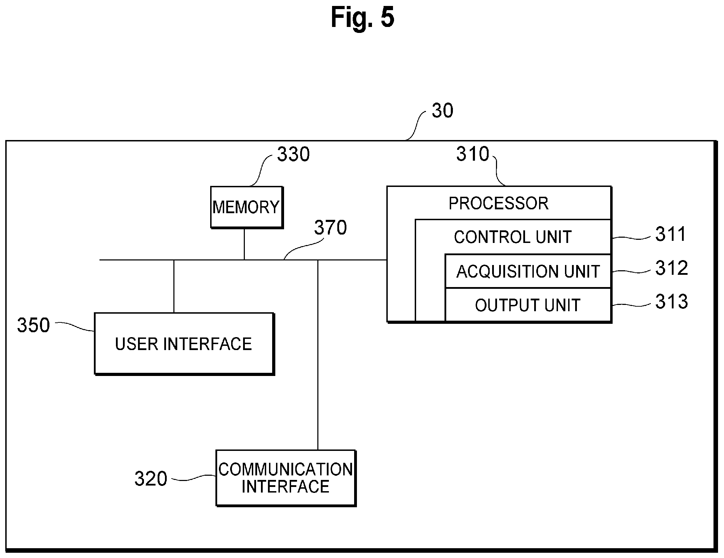

Figure 5 is a diagram illustrating an example of the third server 30 according to an embodiment of the present disclosure. The third server 30 includes one or a plurality of processors (CPUs) 310, one or a plurality of communication interfaces 320, a memory 330, a user interface 350, and one or a plurality of communication buses 370 for interconnecting these components.

The user interface 350 is connected to a display and an input device (such as a keyboard and/or a mouse, or some other pointing device) and has a display function and an input function.

The memory 330 is, for example, a high-speed random access memory such as a DRAM, an SRAM, or other random access solid-state storage devices, and may also be a nonvolatile memory such as one or a plurality of magnetic disk storage devices, optical disk storage devices, flash memory devices, or other nonvolatile solid-state storage devices, and may be a non-transitory recording medium.

The memory 330 stores data and programs used by the information processing system 1. For example, the memory 330 stores application programs and the like for the third server 30 in the information processing system 1.

The processor 310 executes the program stored in the memory 330, thereby implementing a control unit 311. The control unit 311 includes an acquisition unit 312 and an output unit 313. The control unit 311 receives advertisement material checks from the second server 20, retains permitted advertisement materials, acquires an advertisement playlist from the first server 10, reads out the advertisement materials listed in the advertisement playlist, and transmits the readout advertisements to a transmission management apparatus (not illustrated; also referred to as a master). Advertisements are thereby broadcast.

The acquisition unit 312 acquires each advertisement material from the second server 20. Each advertisement material is associated with corresponding advertisement material identification information (advertisement material ID). One or a plurality of advertisement materials acquired by the acquisition unit 312 are stored in the memory 330.

The output unit 313 outputs, for an advertisement slot immediately before the advertisement is broadcast, a request for an advertisement playlist to the first server 10. The output timing of the request is immediately before the advertisement is broadcast in the advertisement slot (approximately several seconds before broadcasting). The advertisement playlist for the advertisement slot will be described later with reference to figure 6.

The acquisition unit 312 acquires, from the first server 10, a playlist for a predetermined advertisement slot as a response. The control unit 311, for example, identifies an advertisement material from an advertisement material ID listed in the playlist, and transmits the identified advertisement material to the transmission management apparatus. As a result, the advertisement is displayed on the user's display device 70.

### <Advertisement slot and playlist>

Figure 6 is a diagram for explaining an advertisement slot and an advertisement playlist according to an embodiment of the present disclosure. The advertisement slots illustrated in Figure 6 are predetermined advertisement broadcast time slots in which advertisements for products, services, or the like are broadcast. For each advertisement slot, at least the broadcast date and time and the broadcast station are determined. In the example illustrated in Figure 6, the advertisement slots are advertisement slots for television commercials. However, the advertisements are not limited thereto, and advertisements broadcast using the advertisement slots may be radio commercials.

An advertisement slot is associated with advertisement slot information, which is information of the advertisement slot. The advertisement slot information is general information of each advertisement slot, and is given by an advertisement slot provider such as a broadcasting station. In addition, the advertisement slot information includes at least the date and time (advertisement broadcast time slot) when the advertisement is broadcast in the advertisement slot and the broadcasting station, and further includes the type of the advertisement slot, the length of the advertisement slot in seconds, the program name associated with the advertisement slot (specifically, the name of the program in which the advertisement slot is inserted during or immediately before its broadcast time), and the price of the advertisement slot (purchase price). Here, the type of advertisement slot is information indicating a relationship between the advertisement slot and a program broadcast time, and specifically includes a "PT (Participating Commercial: a time slot set within a program broadcast time)" and an "SB (Station Break: a time slot between the end of one program and the start of the next program)", among others.

In addition, the advertisement slot information may further include information other than the above, such as a broadcast region (area information), a broadcast period, a broadcast time slot (time slot during which advertisements are broadcast in a day: Daypart), information regarding the genre of a program associated with the advertisement slot and performers of the program, information regarding an event related to the program, and a target described later. However, these are merely examples and are not limited to such items of information.

A single advertisement slot is available for broadcasting a plurality of advertisements. Within a single advertisement slot, the order in which advertisements are broadcast is referred to as the advertisement position. The advertisement position is also referred to as "PIB (Position in Break)". For example, in the case where four 15-second advertisements can be broadcast in a single advertisement slot (number of positions = 4), the advertisement position indicates the order in which each advertisement is broadcast.

Furthermore, an advertisement slot is assigned advertisement slot identification information (advertisement slot ID) that uniquely identifies the advertisement slot. With this advertisement slot ID, a single advertisement slot can be identified from among a large number of advertisement slots.

In addition, an advertisement playlist will be described with reference to Figure 6. An advertisement playlist is a list that is associated with an advertisement slot ID and includes advertisement material identification information (advertisement material ID) that identifies an advertisement material to be broadcast in the advertisement slot, the position of the advertisement, and information on length in seconds (duration information) of the advertisement material. Figure 6 illustrates an example of an advertisement playlist with the number of positions being 4, in which information on length in seconds and the advertisement material ID are listed in order of position. For example, guaranteed-type advertisements are allocated using a mathematical model to positions 1, 2, and 4, and a programmatic advertisement won in the immediately preceding auction is allocated to position 3.

The first server 10 receives a request for an advertisement playlist from the third server 30, generates an advertisement playlist in which advertisements to be broadcast in the advertisement slot are listed, and transmits the advertisement playlist as a response to the third server 30.

### <Data example>

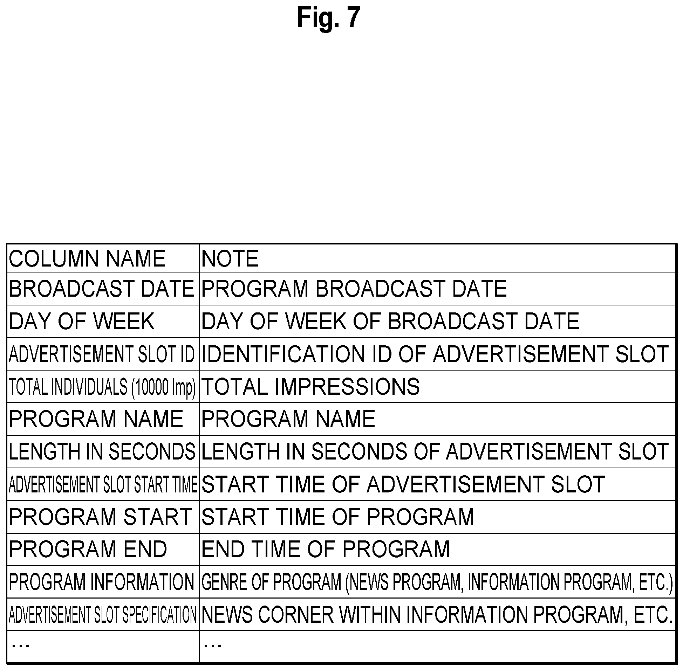

Next, a data example will be described. Figure 7 is a diagram illustrating an example of attribute information of an advertisement slot according to an embodiment of the present disclosure. As illustrated in Figure 7, the attribute information (column name) of the advertisement slot includes, for example, "Program" (program broadcast date), "Day of Week" (day of the week of the broadcast date), "Advertisement Slot ID" (identification ID of the advertisement slot), "Total Individuals (10000 Imp)" (total impressions), "Program Name" (program name), "Length in Seconds" (length in seconds of the advertisement slot), "Advertisement Slot Start Time" (start time of the advertisement slot), "Program Start" (start time of the program), "Program End" (end time of the program), "Program Information" (genre of the program (news program, information program, etc.)), "Advertisement Slot Specification" (news corner within an information program, etc.), and the like. The advertisement slot illustrated in Figure 7 may include a plurality of positions as illustrated in Figure 6.

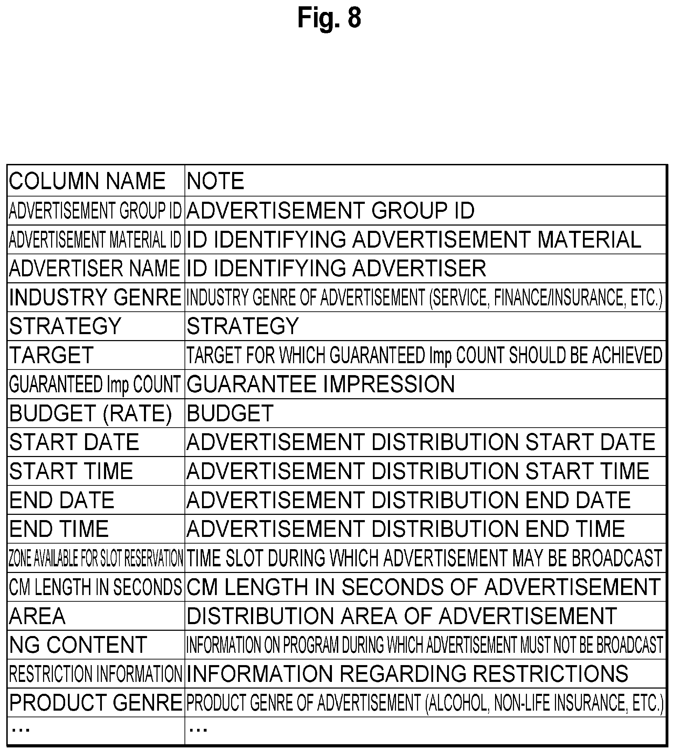

Figure 8 is a diagram illustrating an example of attribute information of an advertisement material according to an embodiment of the present disclosure. As illustrated in Figure 8, the attribute information (column name) of the advertisement includes, for example, "Advertisement Group ID" (advertisement group ID), "Advertisement Material ID" (ID identifying the advertisement material), "Advertiser Name" (ID identifying the advertiser), "Industry Genre" (industry genre of the advertisement (service, finance/insurance, etc.)), "Strategy" (strategy), "Target" (target for which the guaranteed Imp count should be achieved), "Guaranteed Imp Count" (guaranteed number of impressions), "Budget (Rate)" (budget), "Start Date" (advertisement distribution start date), "Start Time" (advertisement distribution start time), "End Date" (advertisement distribution end date), "End Time" (advertisement distribution end time), "Zone Available for Slot Reservation" (time slot during which the advertisement may be broadcast), "CM Length in Seconds" (CM length in seconds of the advertisement), "Area" (distribution area of the advertisement), "NG Content" (information on program during which the advertisement must not be broadcast), "Restriction Information" (information regarding restrictions), "Product Genre" (product genre of the advertisement (alcohol, non-life insurance, etc.)), and the like.

In addition, the "NG Content" illustrated in Figure 8 is included in the constraint conditions for the advertisement material. For example, for an advertisement material of a predetermined product or predetermined service, there may be a constraint that the advertisement must not be broadcast in an advertisement slot of "Program Information" of a predetermined genre shown in Figure 7. In addition, "Zone Available for Slot Reservation", "Area", "Restriction Information" and the like may be included in the constraint conditions for advertisement selection.

In addition, the determination unit 114 inputs the following into the aforementioned mathematical model: the "Guaranteed Imp Count" of the advertisement material illustrated in Figure 8 as a guarantee variable; "NG Content", "Restriction Information", and the like as constraint conditions; and the remaining Imp count obtained from the confirmed viewing rate and the actual number of accesses as "Inventory Information". In addition, information on ordering conditions such as "Budget", "Target", "Area", "CM Length in Seconds", and the period (from "Start Date" and "Start Time" to "End Date" and "End Time") may also be input into the mathematical model, and advertisement materials may be determined for each position of the advertisement slot.

### <Concrete examples>

Next, an example of a mathematical model (mathematical optimization algorithm) for advertisement material selection will be described with reference to Figure 9 and Figure 10. Figure 9 is a diagram illustrating an example of data of an advertisement slot (CM slot) and data in which respective advertisement materials are grouped according to an embodiment of the present disclosure.

An advertisement slot is associated with an advertisement slot ID and a total length in seconds. Advertisement groups are grouped using information regarding order conditions such as advertisement budget, period, CM length in seconds, guaranteed number of impressions, and target, and include an advertisement group ID and respective attribute information.

Advertisement selection mainly includes the following two steps.

Step 1: assigning an advertisement group ID to each CM slot.

Step 2: assigning an advertisement material ID to each position within the CM slot.

The determination unit 114 uses a mathematical model to assign an advertisement group ID to a CM slot, as Step 1, with an objective function such as maximizing the total remaining inventory across all advertisement slots (overall optimization), so as to satisfy pre-specified constraint conditions and achieve the guaranteed number of impressions for a target attribute on the basis of the ordering conditions. The surplus inventory generated as a result makes it possible to accept new advertisement orders and hold auctions.

As Step 2, the determination unit 114 assigns an advertisement group ID to each position and determines the order within the slot while satisfying pre-specified priorities and constraint conditions related to the arrangement of advertisement materials.

Figure 10 is a diagram illustrating an example of an allocation pattern to an advertisement slot according to an embodiment of the present disclosure. In the example illustrated in Figure 10, it is assumed that three patterns, Patterns A to C, are searched by, for example, the search of a mathematical model. It is assumed that the total remaining inventory of Pattern A is 17 million Imp, the total remaining inventory of Pattern B is 8 million Imp, and the total remaining inventory of Pattern C is 16 million Imp.

In the case of the example illustrated in Figure 10, the determination unit 114 determines the allocation of Pattern B because the total remaining inventory of Pattern B is the largest. In the case of Pattern B, it becomes possible to allocate advertisement materials with a large remaining Imp count to the remaining positions.

### <Initial display ratio>

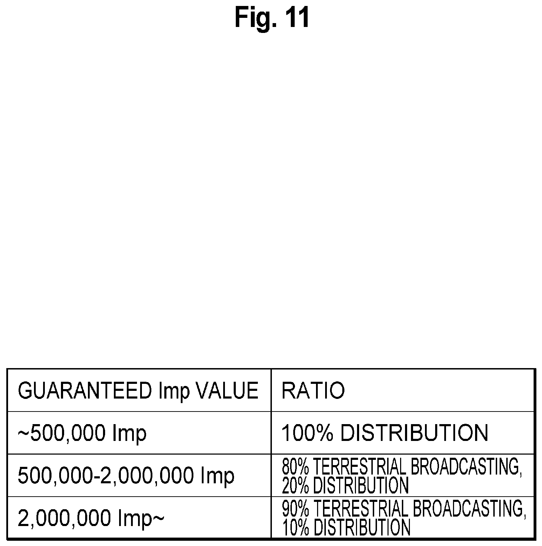

Figure 11 is a diagram illustrating an example of initial display ratios of broadcasting and web distribution according to an embodiment of the present disclosure. For example, the setting unit 113 may determine the initial display ratio as follows.

Guaranteed number of impressions (guaranteed number of times of display): 500,000 Imp or less: 100% broadcast distribution Guaranteed number of impressions: 500,000 to 2,000,000 Imp: 80% terrestrial broadcasting, 20% web distribution Guaranteed number of impressions: 2,000,000 Imp or more: 90% terrestrial broadcasting, 10% web distribution

It should be noted that the above is merely an example, and other conditions and processing ratios may also be set.

### <Description of operations>

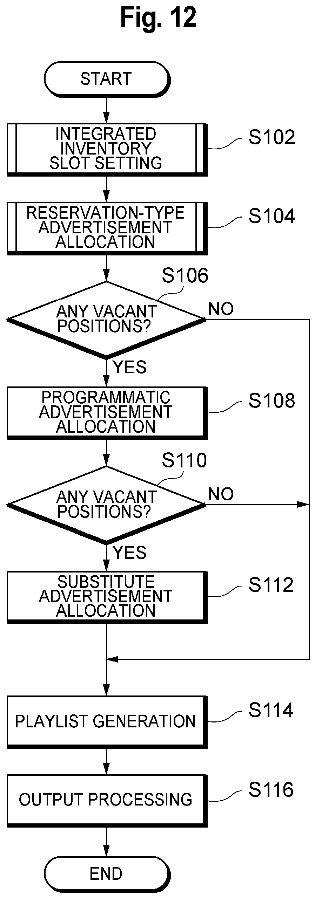

Next, each operation of the information processing system 1 will be described. Figure 12 is a flowchart illustrating an example of allocation processing for an advertisement slot according to an embodiment. In the example illustrated in Figure 12, each processing is executed for one advertisement slot.

In step S102, the setting unit 113 performs setting of an inventory slot for the integrated advertisement. For example, as the setting of the inventory slot, the setting unit 113 sets a display ratio for either terrestrial broadcasting or web distribution.

In step S104, the determination unit 114 performs allocation of a reservation-type (or guaranteed-type) advertisement to a predetermined advertisement slot. For example, the determination unit 114 executes a mathematical model at a predetermined timing and allocates advertisement materials to each position of the predetermined advertisement slot.

In step S106, the determination unit 114 determines at a predetermined timing whether there is any vacancy in each position of the advertisement slot. If there is a vacant position (step S106: YES), the processing proceeds to step S108; if there is no vacant position (step S106: NO), the processing proceeds to step S114.

In step S108, the bid management unit 115 executes bidding processing for the vacant position. For example, the bid management unit 115 specifies ordering conditions, makes an auction request to the sixth information processing apparatus 60, and acquires one or a plurality of winning advertisement materials from the sixth information processing apparatus 60.

In step S110, the determination unit 114 determines whether there is any vacancy in each position of the advertisement slot. If there is a vacant position (step S110: YES), the processing proceeds to step S112; if there is no vacant position (step S110: NO), the processing proceeds to step S114.

In step S112, the determination unit 114 allocates substitute advertisements to positions that have not been filled by either guaranteed-type advertisements or programmatic advertisements.

In step S114, the generation unit 116 generates an advertisement playlist for a predetermined advertisement slot on the basis of the advertisement materials determined by the determination unit 114 and/or the advertisement materials acquired by the bid management unit 115.

In step S116, the output unit 117 outputs the advertisement playlist to the third server 30 that manages a plurality of advertisement materials, and outputs, to the fourth server 40 that manages web distribution of advertisements, an advertisement material of the first advertisement and the number of times of display of web distribution set by the setting unit 113.

In each processing illustrated in Figure 12, description has been given using one flowchart for convenience of explanation; however, step S102, step S104, and steps S106 to S116 may be executed at different timings. For example, step S102 may be performed at a timing at which an integrated advertisement is newly stored as inventory, step S104 may be performed at a predetermined time every night, and steps S106 to S116 may be performed before a predetermined time at which the advertisement slot is used for broadcasting.

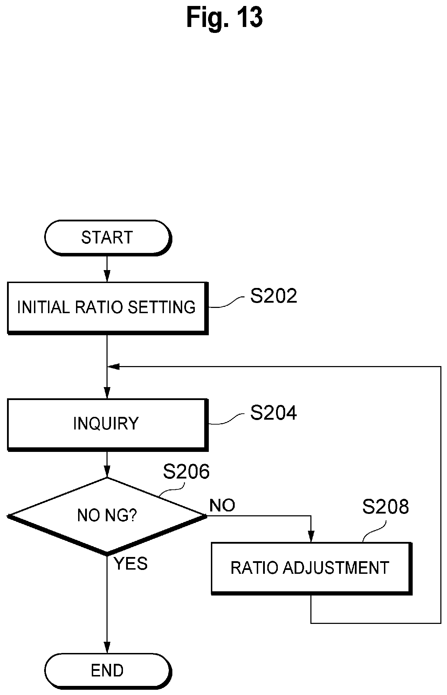

Figure 13 is a flowchart illustrating an example of display ratio setting processing for an integrated advertisement according to an embodiment of the present disclosure. The processing illustrated in Figure 13 corresponds to the processing illustrated in step S102 in Figure 12.

In step S202, the setting unit 113 sets an initial display ratio for the integrated advertisement on the basis of the guaranteed number of impressions set forth in the contract. For example, the setting unit 113 can set an initial display ratio according to the guaranteed number of impressions as illustrated in Figure 11.

In step S204, the setting unit 113 inquires of the determination unit 114 and the fourth server 40 whether the number of times of display based on the set initial display ratio is permissible.

In step S206, the setting unit 113 determines whether the inquiry result contains no NG. If there is no NG (step S206: YES), the processing ends; if there is at least one NG (step S206: NO), the processing proceeds to step S208.

In step S206, the setting unit 113 adjusts the display ratio. Thereafter, the processing returns to step S204, and the setting unit 113 inquires again of the determination unit 114 and the fourth server 40 whether the adjusted display ratio is permissible.

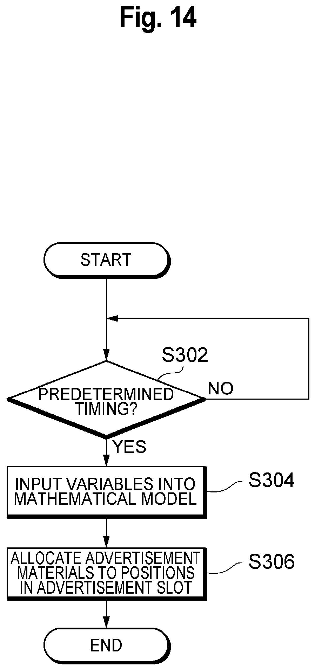

Figure 14 is a flowchart illustrating an example of advertisement material allocation processing using a mathematical model according to an embodiment of the present disclosure. The processing illustrated in Figure 14 corresponds to the processing illustrated in step S104 in Figure 12.

In step S302, the determination unit 114 determines whether a predetermined timing has arrived. The predetermined timing is, for example, a predetermined time every night. If the predetermined timing has arrived (step S302: YES), the processing proceeds to step S304; otherwise (step S302: NO), the processing returns to step S302.

In step S304, the determination unit 114 inputs, for terrestrial broadcasting, into a mathematical model in which an objective function satisfying predetermined conditions regarding display inventory of advertisements is set, an inventory variable regarding display inventory of a plurality of advertisements including the first advertisement (integrated inventory), a guarantee variable regarding display guarantees for a plurality of advertisements including the first advertisement (integrated inventory), and a constraint condition regarding advertisement display (if updated).

In step S306, the determination unit 114 determines, on the basis of the output from the mathematical model, one or a plurality of advertisement materials to be allocated to a predetermined advertisement slot, and allocates each of the determined advertisement materials to each position.

With respect to each processing described above, the order may be changed or a plurality of pieces of processing may be performed in parallel, within a range where the final product remains unchanged.

The above embodiments are examples for explaining the technique of the present disclosure, and are not intended to limit the technique of the present disclosure to only those embodiments. The technique of the present disclosure can be modified in various ways without departing from the gist thereof. For example, each processing of each apparatus may be appropriately integrated or the processing may be transferred to another apparatus.

In addition, by enabling the above platform to distribute advertisements also to external platforms, it becomes possible to produce advertisement products on each of terrestrial broadcasting, web distribution, and external platforms. Furthermore, a system may be constructed in which a platformer obtains its own sales rights from external platforms and integrates, sells, and measures all advertisement inventory including terrestrial broadcasting under the control of the platformer. This makes it possible to achieve a state where a wide "reach" can be achieved using the platformer's advertisement inventory.

It should be noted that the mathematical model described above may be implemented using a machine learning model based on artificial intelligence (AI). For example, the mathematical model can be implemented by reinforcement learning in which a reward function is set such that the reward increases as the total remaining inventory of all advertisement slots increases.

### Reference Signs List

- 1: Information processing system
- 10 to 40: First to fourth servers
- 50: Fifth information processing apparatus
- 60: Sixth information processing apparatus
- 70: Display device
- 80: User device
- 110: Processor
- 130: Memory
- 111: Control unit
- 112: Acquisition unit
- 113: Setting unit
- 114: Determination unit
- 115: Bid management unit
- 116: Generation unit
- 117: Output unit
- 310: Processor
- 311: Control unit
- 312: Acquisition unit
- 313: Output unit

## Claims

1. An information processing system comprising:
a setting unit that sets, for a first advertisement that allows terrestrial broadcasting and web distribution, a ratio of the number of times of display in the terrestrial broadcasting to the number of times of display in the web distribution;
a determination unit that determines, for terrestrial broadcasting, one or a plurality of advertisement materials to be allocated to a predetermined advertisement slot by inputting into a mathematical model, in which an objective function satisfying predetermined conditions regarding display inventory of advertisements is set, an inventory variable regarding display inventory of a plurality of advertisements including the first advertisement, a guarantee variable regarding display guarantees for a plurality of advertisements including the first advertisement, and a constraint condition regarding advertisement display;
a bid management unit that acquires, after the determination made by the determination unit, in a case where there is a vacant position in the predetermined advertisement slot, one or a plurality of advertisement materials that have won the bid for the vacant position;
a generation unit that generates an advertisement playlist for the predetermined advertisement slot on the basis of the advertisement materials determined by the determination unit and/or the advertisement materials acquired by the bid management unit; and
an output unit that outputs the advertisement playlist to an advertisement management apparatus that manages a plurality of advertisement materials, and outputs, to a distribution management apparatus that manages web distribution of advertisements, an advertisement material of the first advertisement and the number of times of display of the web distribution set by the setting unit.

2. The information processing system according to claim 1, wherein the setting unit inquires of the determination unit and the distribution management apparatus whether the number of times of display based on the ratio is permissible.

3. The information processing system according to claim 2, wherein the setting unit adjusts the ratio and inquires again of the determination unit and the distribution management apparatus in a case where an inquiry result from at least one of the determination unit and the distribution management apparatus is negative.

4. The information processing system according to claim 1, wherein the setting unit sets an initial ratio on the basis of a guaranteed number of times of display.

5. The information processing system according to claim 1, wherein the determination unit determines to increase the number of times of display in the web distribution in a case where the number of times of display of the first advertisement in the terrestrial broadcasting does not satisfy a first fulfillment condition.

6. The information processing system according to claim 1, wherein the determination unit determines to increase the number of times of display in the terrestrial broadcasting in a case where the number of times of display of the first advertisement in the web distribution does not satisfy a second fulfillment condition.

7. The information processing system according to claim 1, wherein, in a case where the number of times of display of a predetermined advertisement satisfies a third fulfillment condition, the determination unit deletes the advertisement material of the predetermined advertisement allocated to another advertisement slot.

8. The information processing system according to claim 1, wherein, in a case where the number of times of display of a predetermined advertisement does not satisfy a fourth fulfillment condition, the determination unit allocates the advertisement material of the predetermined advertisement to another advertisement slot.

9. The information processing system according to claim 1, wherein the determination unit inputs, at a predetermined timing, at least a latest inventory variable and a latest guarantee variable into the mathematical model, and updates one or a plurality of advertisement materials to be allocated to the predetermined advertisement slot.

10. An information processing method executed by one or a plurality of information processing apparatuses, the method comprising:
setting, for a first advertisement that allows terrestrial broadcasting and web distribution, a ratio of the number of times of display in the terrestrial broadcasting to the number of times of display in the web distribution;
determining, for terrestrial broadcasting, one or a plurality of advertisement materials to be allocated to a predetermined advertisement slot by inputting into a mathematical model, in which an objective function satisfying predetermined conditions regarding display inventory of advertisements is set, an inventory variable regarding display inventory of a plurality of advertisements including the first advertisement, a guarantee variable regarding display guarantees for a plurality of advertisements including the first advertisement, and a constraint condition regarding advertisement display;
acquiring, after the determination of the one or a plurality of advertisement materials, in a case where there is a vacant position in the predetermined advertisement slot, one or a plurality of advertisement materials that have won the bid for the vacant position;
generating an advertisement playlist for the predetermined advertisement slot on the basis of the determined one or a plurality of advertisement materials and/or the acquired one or a plurality of advertisement materials; and
outputting the advertisement playlist to an advertisement management apparatus that manages a plurality of advertisement materials, and outputting, to a distribution management apparatus that manages web distribution of advertisements, an advertisement material of the first advertisement and the set number of times of display of the web distribution.

11. A program causing one or a plurality of information processing apparatuses to:
set, for a first advertisement that allows terrestrial broadcasting and web distribution, a ratio of the number of times of display in the terrestrial broadcasting to the number of times of display in the web distribution;
determine, for terrestrial broadcasting, one or a plurality of advertisement materials to be allocated to a predetermined advertisement slot by inputting into a mathematical model, in which an objective function satisfying predetermined conditions regarding display inventory of advertisements is set, an inventory variable regarding display inventory of a plurality of advertisements including the first advertisement, a guarantee variable regarding display guarantees for a plurality of advertisements including the first advertisement, and a constraint condition regarding advertisement display;
acquire, after the determination of the one or a plurality of advertisement materials, in the case where there is a vacant position in the predetermined advertisement slot, one or a plurality of advertisement materials that have won the bid for the vacant position;
generate an advertisement playlist for the predetermined advertisement slot on the basis of the determined one or a plurality of advertisement materials and/or the acquired one or a plurality of advertisement materials; and
output the advertisement playlist to an advertisement management apparatus that manages a plurality of advertisement materials, and output, to a distribution management apparatus that manages web distribution of advertisements, an advertisement material of the first advertisement and the set number of times of display of the web distribution.
